# EUROPÄISCHE PATENTSCHRIFT

(11) **EP 3 592 590 B1**
(45) Veröffentlichungstag und Bekanntmachung des Hinweises auf die Patenterteilung: **05.05.2021**
(21) Anmeldenummer: 18705820.1
(22) Anmeldetag: 06.02.2018
(51) Int. Cl.: B60K 6/48, B60K 6/40

(54) **HYBRIDMODUL MIT SCHWUNGRAD; SOWIE HYBRIDANTRIEBSSTRANG**
HYBRID MODULE HAVING A FLYWHEEL AND HYBRID DRIVE TRAIN
MODULE HYBRIDE DOTÉ D'UN VOLANT D'INERTIE; ET CHAÎNE DE TRACTION HYBRIDE

(30) Priorität: 06.03.2017 DE 102017104568; 08.12.2017 DE 102017129264
(43) Veröffentlichungstag der Anmeldung: 15.01.2020
(73) Patentinhaber: Schaeffler Technologies AG & Co. KG, 91074 Herzogenaurach (DE)
(72) Erfinder: HOPPE, Marcus, 77855 Achern (DE)
(86) Internationale Anmeldenummer: PCT/DE2018/100095
(87) Internationale Veröffentlichungsnummer: WO 2018/161991

(56) Entgegenhaltungen:
- EP-A1- 1 777 426
- WO-A2-2015/075365
- DE-C1- 19 704 786

## Beschreibung

Die Erfindung betrifft ein Hybridmodul für einen (hybriden) Antriebsstrang eines Kraftfahrzeugs, wie eines Pkws, Lkws, Busses oder sonstigen Nutzfahrzeuges, mit einer ersten Kupplung und einer mit einem Drehbestandteil der ersten Kupplung drehfest verbundenen Zwischenwelle, wobei die Zwischenwelle zudem mit einem Drehbestandteil einer zweiten Kupplung drehfest gekoppelt oder koppelbar ist. Auch betrifft die Erfindung einen Hybridantriebsstrang für ein Kraftfahrzeug, mit dem Hybridmodul.

Gattungsgemäßer Stand der Technik ist bereits hinlänglich bekannt. Beispielsweise offenbart die WO 2016/070 878 A1 ein Hybridmodul für einen Antriebsstrang eines Kraftfahrzeuges, mit einem elektrischen Antriebsmotor, der in dem Hybridmodul integriert ist.

Bei den aus dem Stand der Technik bekannten Hybridmodulen besteht jedoch der Nachteil, dass das Vorsehen eines Schwungrades bisher den benötigten Bauraum deutlich vergrößert hat. Insbesondere in axialer Richtung musste hierfür deutlich mehr Bauraum vorgesehen werden. Zudem gibt es Betriebszustände, in denen das Schwungrad von der zweiten Kupplung abgetrennt wird und dadurch die gewünschte Drehschwingungsdämpfung an der jeweils mit dieser Kupplung zusammenwirkenden Getriebewelle ausfallen kann. Auch sind die bisher umgesetzten Hybridmodule häufig relativ aufwändig herzustellen. Ein Beispiel hierfür stellt die DE 197 04 786 C1 dar.

Es ist daher die Aufgabe der vorliegenden Erfindung, die aus dem Stand der Technik bekannten Nachteile zu beheben und insbesondere ein Hybridmodul zur Verfügung zu stellen, durch das zum einen eine über sämtliche Betriebszustände verlässliche Drehschwingungsdämpfung ermöglicht ist und zum anderen kein oder möglichst wenig zusätzlicher Bauraum eingenommen werden soll.

Dies wird erfindungsgemäß durch eine Vorrichtung nach Anspruch 1 gelöst.

Weitere vorteilhafte Ausführungsformen sind mit den Unteransprüchen beansprucht und nachfolgend näher erläutert.

Die zweite Kupplung ist vorteilhafterweise ein unmittelbarer Bestandteil des Hybridmoduls. In weiteren Ausführungen kann sie jedoch auch als separater Bestandteil angesehen sein.

Ist die Zwischenwelle direkt / unmittelbar mit dem Schwungrad drehfest gekoppelt oder dazu ausgebildet, direkt / unmittelbar mit dem Schwungrad drehfest gekoppelt zu sein, wird der Aufbau des Hybridmoduls weiter vereinfacht.

Ist das Schwungrad einteilig ausgebildet, wird der Montageaufwand des Hybridmoduls weiter herabgesenkt. Alternativ hierzu ist es auch von Vorteil, wenn das Schwungrad mehrteilig ausgebildet ist, da dadurch insbesondere die Schwungmasse des Schwungrades individuell einstellbar ist. Bei der mehrteiligen Ausbildung des Schwungrades ist es daher ebenfalls zweckmäßig, wenn für die verschiedenen Bestandteile unterschiedliche Materialien verwendet sind, sodass der Herstellaufwand weiter herabgesenkt wird.

Weist das Schwungrad einen Napfbereich auf, wobei an dem Napfbereich ein Stützlager (zur Lagerung des Schwungrades / der Zwischenwelle relativ zu einem Gehäuse) angebracht / angeordnet / vorgesehen ist, ist auch eine Lagerung des Schwungrades besonders geschickt umgesetzt.

Weiterhin von Vorteil ist es, wenn das Schwungrad formschlüssig und/oder kraftschlüssig mit der Zwischenwelle verbunden ist. Dadurch sind besonders montagefreundliche Verbindungen realisiert.

In diesem Zusammenhang ist es auch zweckmäßig, wenn das Schwungrad mittels einer Verzahnung, vorzugsweise einer Kerbverzahnung, drehfest mit der Zwischenwelle verbunden ist / drehfest auf die Zwischenwelle aufgeschoben ist. Dadurch ist eine in Drehrichtung wirkende formschlüssige Verbindung besonders platzsparend realisiert.

Weiterhin ist es zweckmäßig, wenn das Schwungrad mittels mehrerer Befestigungsmittel, vorzugsweise Niete oder Schrauben, drehfest mit der Zwischenwelle verbunden ist. Von Vorteil ist es in diesem Fall auch, wenn an der Zwischenwelle ein Flanschbereich angeformt / ausgebildet ist, an dem das Schwungrad mittels der Befestigungsmittel fixiert ist. Dadurch wird eine insbesondere in axialer Richtung kompakte Verbindung realisiert.

Darüber hinaus ist es vorteilhaft, wenn die beiden Bestandteile des Schwungrades miteinander formschlüssig und/oder kraftschlüssig verbunden sind. Bevorzugt ist hierbei insbesondere eine kraftschlüssige Verbindung mittels mehrerer Befestigungsmittel, besonders bevorzugt mittels mehrerer Niete oder Schrauben.

Zudem ist es vorteilhaft, wenn die beiden Bestandteile des Schwungrades in axialer Richtung der zweiten Kupplung gesehen verschachtelt sind (d.h. axial ineinander liegend ausgebildet sind), wodurch axialer Bauraum zusätzlich eingespart wird.

Weiterhin betrifft die Erfindung einen Hybridantriebsstrang für ein Kraftfahrzeug, mit dem erfindungsgemäßen Hybridmodul nach zumindest einer der zuvor beschriebenen Ausführungen.

In anderen Worten ausgedrückt, ist somit ein Hybridmodul mit einem Schwungrad ausgestattet. Erfindungsgemäß ist entweder ein einteiliges Schwungrad oder ein mehrteiliges Schwungrad vorgesehen. Das einteilige Schwungrad integriert mehrere Funktionen gleichzeitig, wie bspw. die Funktion eines Schwungrades für eine Anlaufkupplung (zweite Kupplung) und die Funktion als ein Drehmomentübertragungselement zwischen einer Zwischenwelle und der Anlaufkupplung. Das mehrteilige Schwungrad ist bevorzugt eingesetzt, wenn die Anlaufkupplung mit einem Dämpfer, einem Radialausgleich oder ähnlichen Komponenten ausgestattet ist.

Die Erfindung wird nun nachfolgend anhand von Figuren näher erläutert, in welchem Zusammenhang auch verschiedene Ausführungsbeispiele beschrieben sind.

Es zeigen:
- Fig. 1: eine Längsschnittdarstellung eines Hybridmoduls nach einem bekannten Ausführungsbeispiel, wobei ein drehfest mit einer Zwischenwelle des Hybridmoduls verbundenes Schwungrad einteilig ausgeführt ist,
- Fig. 2: eine Längsschnittdarstellung des Hybridmoduls nach Fig. 1, wobei zusätzlich zu einer ersten Kupplung eine mit der Zwischenwelle gekoppelte, zweite Kupplung gezeichnet ist,
- Fig. 3: eine Längsschnittdarstellung des Hybridmoduls nach den Fign. 1 und 2, wobei im Vergleich zu Fig. 2 ein eine Dämpfungseinrichtung ausbildendes Zweimassenschwungrad gezeichnet ist,
- Fig. 4: eine perspektivische Darstellung des in Längsrichtung geschnittenen Hybridmoduls nach Fig. 3,
- Fig. 5: eine Längsschnittdarstellung eines erfindungsgemäßen Hybridmoduls nach einem ersten Ausführungsbeispiel, wobei das Schwungrad nun mehrteilig ausgebildet ist, und
- Fig. 6: eine Längsschnittdarstellung des Hybridmoduls nach Fig. 5, wobei neben der ersten Kupplung wiederum die zweite Kupplung dargestellt ist.

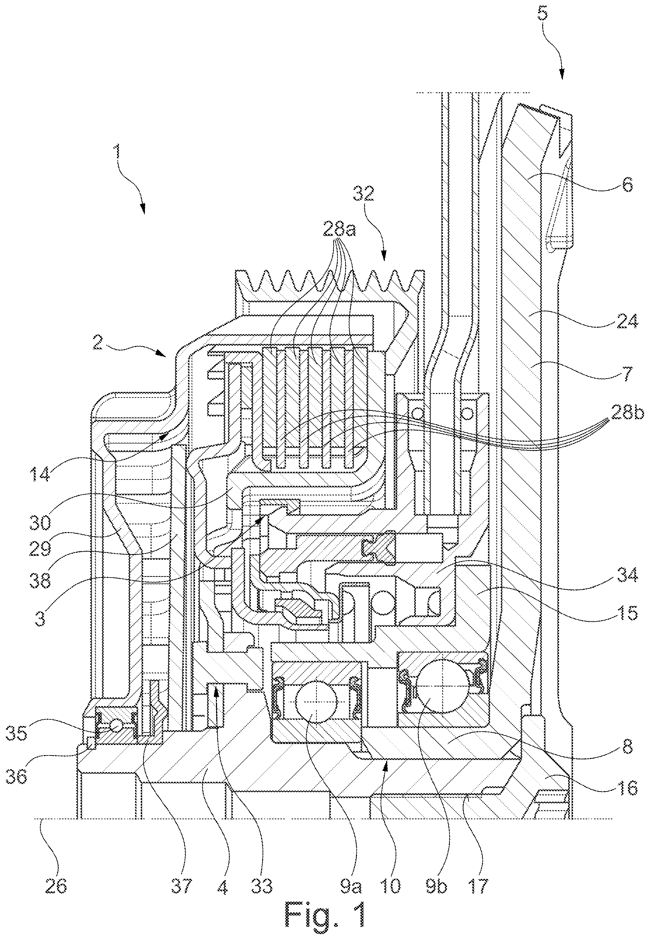

In den Fign. 1 bis 4 ist ein bekanntes Ausführungsbeispiel eines Hybridmoduls 1 veranschaulicht. Das Hybridmodul 1 ist im Betrieb Bestandteil eines Hybridantriebsstranges eines Kraftfahrzeuges. Das Hybridmodul 1 ist dann vorzugsweise, entlang des Drehmomentübertragungspfades betrachtet, zwischen einer Ausgangswelle einer Verbrennungskraftmaschine und einem Getriebe eingesetzt. Das Hybridmodul 1 weist auf typische Weise eine Kupplungseinrichtung bestehend aus mehreren Kupplungen auf, wovon eine (erste) Kupplung 2 in Form einer Trennkupplung und eine (zweite) Kupplung 5 in Form einer Anfahrkupplung dargestellt sind. Die erste Kupplung 2 dient zum wahlweisen drehfesten Koppeln der Ausgangswelle mit einer Zwischenwelle 4 des Hybridmoduls 1. Auch weist das Hybridmodul 1 auf typische Weise eine elektrische Maschine / einen Elektromotor auf, die der Übersichtlichkeit halber nicht dargestellt ist. Die elektrische Maschine ist in dieser Ausführung achsparallel, d.h. mit einer Drehachse ihres Rotors parallel zu einer Drehachse 26 der Zwischenwelle 4 / der Ausgangswelle (Kurbelwelle) angeordnet. Die elektrische Maschine ist in diesem Ausführungsbeispiel Bestandteil des Hybridmoduls 1, kann jedoch prinzipiell auch als ein vom Hybridmodul 1 separater Bestandteil betrachtet werden. Die elektrische Maschine ist in weiteren Ausführungen auch koaxial, d.h. mit einer Drehachse ihres Rotors koaxial zu der Drehachse 26 angeordnet.

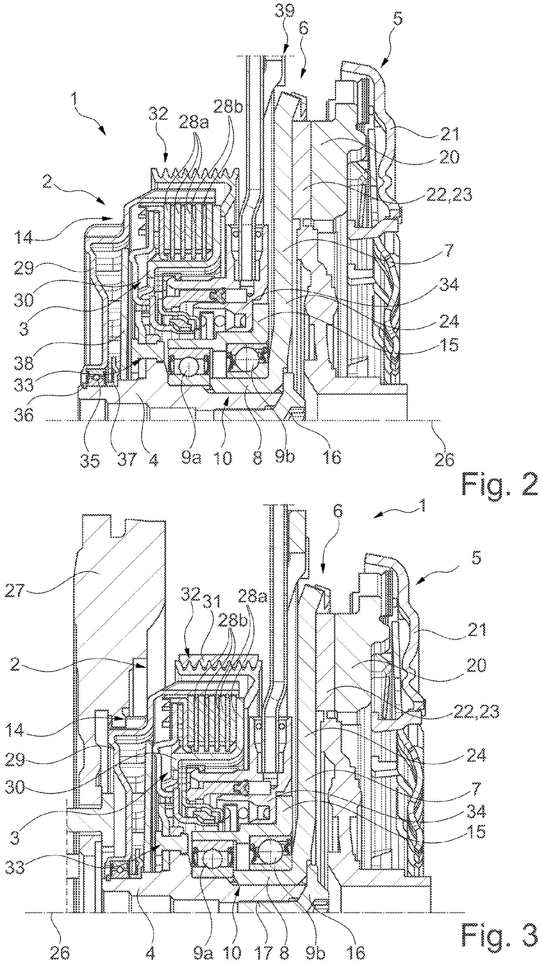

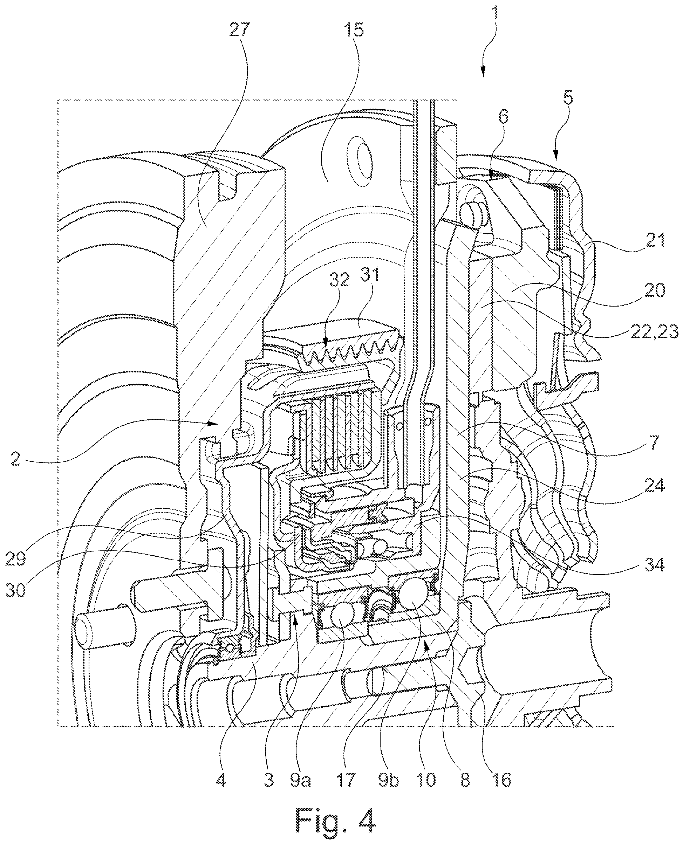

Wie in den Fign. 3 und 4 zu erkennen, ist das Hybridmodul 1 zu einer der Ausgangswelle zugewandten Seite hin mit einer Dämpfungseinrichtung 27 / Drehschwingungsdämpfeinrichtung verbunden. Die Dämpfungseinrichtung 27 ist als ein vereinfacht dargestelltes Zweimassenschwungrad ausgebildet, kann jedoch gemäß weiteren Ausführungen auch prinzipiell als Einmassenschwungrad ausgeführt sein. Die Dämpfungseinrichtung 27 ist eingangsseitig im Betrieb des Hybridmoduls 1 drehfest mit der Ausgangswelle der Verbrennungskraftmaschine verbunden. Ausgangsseitig ist die Dämpfungseinrichtung 27 drehfest mit einem ersten Drehbestandteil 14 der ersten Kupplung 2 verbunden. Die Dämpfungseinrichtung 27 wird als Bestandteil des Hybridmoduls 1 angesehen, kann jedoch auch als ein von dem Hybridmodul 1 losgelöstes Element angesehen werden, das erst bei der Montage des Hybridmoduls 1 im Antriebsstrang mit dem Hybridmodul 1 verbunden wird.

Die erste Kupplung 2 ist als eine Reibungskupplung ausgeführt. Insbesondere ist die erste Kupplung 2 als eine Reiblamellenkupplung ausgestaltet. Die erste Trennkupplung 2 ist in diesem Ausführungsbeispiel als trockene Kupplung ausgeführt, kann jedoch prinzipiell auch als nass laufende Kupplung ausgeführt sein. Der erste Drehbestandteil 14 und ein neben dem ersten Drehbestandteil 14 vorgesehener zweiter Drehbestandteil 3 der ersten Kupplung 2 wirken über mehrere Reibelemente 28a und 28b miteinander zusammen. Die beiden Drehbestandteile 3, 14 sind in einer eingekuppelten Stellung der ersten Kupplung 2 seitens ihrer Reibelemente 28a, 28b auf typische Weise reibkraftschlüssig miteinander verbunden. In einer ausgekuppelten Stellung der ersten Kupplung 2 sind die Reibelemente 28a und 28b und somit die Drehbestanteile 3, 14 frei relativ zueinander verdrehbar angeordnet. Die beiden Drehbestandteile 3, 14 sind um die zentrale Drehachse 26 drehbar angeordnet. Die jeweiligen Reibelemente 28a oder 28b sind aufgrund der Ausbildung der ersten Kupplung 2 als Reiblamellenkupplung in Form von Reiblamellen ausgeformt.

Der erste Drehbestandteil 14 weist neben seinen ersten Reibelementen 28a einen einteiligen (ersten) Träger 29 auf. Der erste Träger 29 ist als Außenträger / Außenlamellenträger ausgebildet. An dem ersten Träger 29 sind die mehreren ersten Reibelemente 28a drehfest aufgenommen. Die ersten Reibelemente 28a sind zudem in axialer Richtung relativ zueinander verschiebbar an dem ersten Träger 29 aufgenommen.

Zwischen je zwei benachbarten ersten Reibelementen 28a ist ein zweites Reibelement 28b des zweiten Drehbestandteils 3 angeordnet. Der zweite Drehbestandteil 3 weist einen zweiten Träger 30 in Form eines Innenträgers / Innenlamellenträgers auf, der die zweiten Reibelemente 28b drehfest sowie relativ zueinander axial verschiebbar aufnimmt. Mit dem zweiten Drehbestandteil 3 der ersten Kupplung 2 ist zudem der hier der Übersichtlichkeit halber nicht weiter dargestellte Rotor der elektrischen Maschine antreibend gekoppelt. Hierzu ist der Rotor seitens seiner Rotorwelle über ein Zugmittel 31 (hier Riemen, alternativ auch Kette, etc.) mit dem zweiten Drehbestandteil 3 gekoppelt (Fig. 3). Der zweite Träger 30 weist einen Zugmittelaufnahmebereich 32 auf, der das Zugmittel 31 kraftschlüssig aufnimmt. Der Aufnahmebereich 32 ist radial außerhalb der Reibelemente 28a, 28b angeordnet. Der zweite Träger 30 bildet somit einen Rotor- / Riemenscheiben-Träger aus.

Wie in Fig. 1 weiterhin zu erkennen, ist die erste Kupplung 2 mittels eines Nehmerzylinders 34 betätigbar. Der Nehmerzylinder 34 ist als ein konzentrischer (ringförmiger) Nehmerzylinder 34 (CSC) ausgeführt. Der Nehmerzylinder 34 ist gehäusefest, nämlich seitens der Zwischenwand 15 fest, aufgenommen. Die erste Kupplung 2 ist als normal geschlossene / normal eingerückte Kupplung ausgeführt. Der Nehmerzylinder 34 ist daher als ein Ausrücker / Ausrücksystem umgesetzt.

Der zweite Drehbestandteil 3 ist, seitens seines zweiten Trägers 30, mit der Zwischenwelle 4, die wiederum um die Drehachse 26 drehbar gelagert ist, drehfest verbunden. Die Zwischenwelle 4 ist über zwei Stützlager 9a, 9b relativ zu einem Gehäuse des Hybridmoduls 1 gelagert / radial und axial abgestützt. Die beiden Stützlager 9a, 9b sind an einer Zwischenwand 15 des Gehäuses aufgenommen. In diesem Ausführungsbeispiel dient eine Nietverbindung 33 zur drehfesten Verbindung des zweiten Trägers 30 mit der Zwischenwelle 4. Die Zwischenwelle 4 dient im Betrieb zur Verbindung des zweiten Drehbestandteils 3 mit der weiteren zweiten Kupplung 5.

Wie in Verbindung mit den Fign. 2 bis 4 besonders gut erkennbar, ist mit der Zwischenwelle 4 ein Schwungrad 7 direkt drehfest verbunden, wobei dieses Schwungrad 7 unmittelbar einen Teil eines ersten Drehbestandteils 6 der zweiten Kupplung 5 ausbildet. Die zweite Kupplung 5 ist als eine Reibkupplung, hier in

Form einer Einscheibenkupplung, ausgeführt. Der erste Drehbestandteil 6 der zweiten Kupplung 5 ist mehrteilige ausgebildet. Der erste Drehbestandteil 6 der zweiten Kupplung 5 besteht aus dem Schwungrad 7, aus einer Anpressplatte 20, die relativ zu dem Schwungrad 7 an einem Kupplungsgehäuse 21 axial verschiebbar aufgenommen ist, sowie dem Kupplungsgehäuse 21. Ein zweiter Drehbestandteil 22 der zweiten Kupplung 5 ist auf typische Weise als eine Kupplungsscheibe 23 ausgebildet, wobei diese Kupplungsscheibe 23 im Betrieb weiter mit einer Getriebeeingangswelle eines Getriebes drehfest verbunden ist. In einer eingerückten / eingekuppelten Stellung der zweiten Kupplung 5, wie sie in Fig. 2 beispielhaft erkennbar ist, ist das Schwungrad 7 somit über die Kupplungsscheibe 23 drehfest mit der Getriebeeingangswelle verbunden.

In dem bekannten Ausführungsbeispiel nach den Fign. 1 bis 4 ist das Schwungrad 7 einteilig ausgebildet. Das Schwungrad 7 weist einen radial innen liegenden, im Wesentlichen rohrförmigen Napfbereich 8 auf. Dieser Napfbereich 8 weist an seiner radialen Innenseite eine Kerbverzahnung 10 auf und ist mit dieser Kerbverzahnung 10 auf eine komplementär dazu ausgebildeten Gegenverzahnung an der Zwischenwelle 4 formschlüssig auf der Zwischenwelle 4 befestigt. Durch eine Zentralschraube 16 ist das Schwungrad 7 zudem an der Zwischenwelle 4 axial gesichert. Die Zentralschraube 16 ist in ein Innengewinde 17 der Zwischenwelle 4 eingeschraubt. Somit ist das Schwungrad 7 insbesondere in Drehrichtung / Umfangsrichtung formschlüssig über die Kerbverzahnung 10 mit der Zwischenwelle 4 verbunden, andererseits mittels der Zentralschraube 16 kraftschlüssig in axialer Richtung lagegesichert.

Von dem Napfbereich 8 aus erstreckt sich das Schwungrad 7 im Wesentlichen scheibenförmig nach außen und bildet somit einen Scheibenbereich 24 aus, der radial außerhalb des Napfbereiches 8 an den Napfbereich 8 anschließt. Mit dem Scheibenbereich 24 bildet das Schwungrad 7 eine Schwungmasse aus. Der Scheibenbereich 24 ist daher hinsichtlich seiner Dicke größer als der Napfbereich 8.

Da das zweite Stützlager 9b unmittelbar auf dem Napfbereich 8 aufgenommen ist, ist das Schwungrad 7 auch relativ zu der Zwischenwand 15 radial sowie axial abgestützt. Indirekt ist somit auch wiederum die Zwischenwelle 4 gelagert.

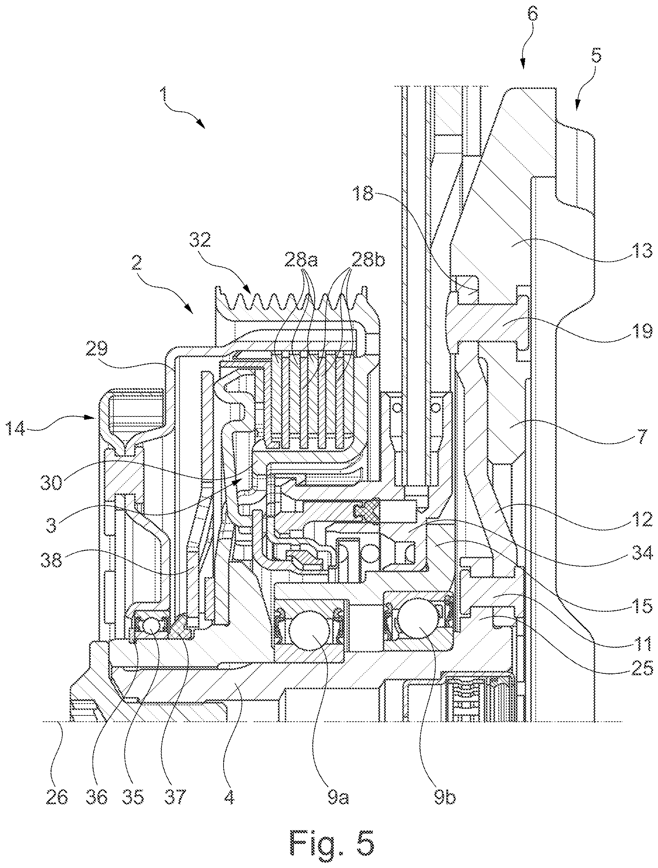

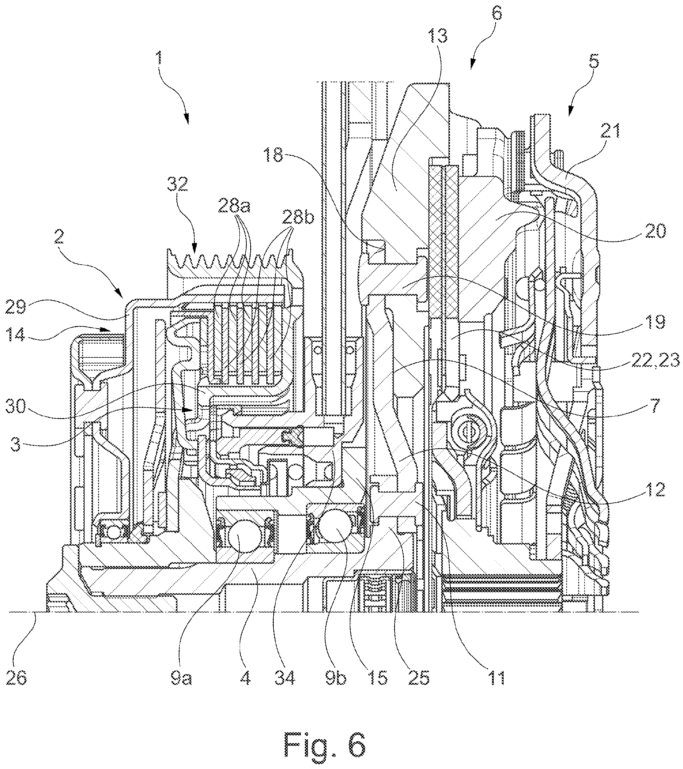

In Verbindung mit den Fign. 5 und 6 ist ein erstes Ausführungsbeispiel des erfindungsgemäßen Hybridmoduls 1 ersichtlich. In dem ersten Ausführungsbeispiel ist das Schwungrad 7 mehrteilig ausgeführt. Das Schwungrad 7 weist im Wesentlichen zwei drehfest miteinander verbundene Bestandteile 12 und 13 auf. Ein erster Bestandteil 12 des Schwungrades 7 ist direkt mit der Zwischenwelle 4 drehfest verbunden. Ein zweiter Bestandteil 13 des Schwungrades 7 ist mit dem Kupplungsgehäuse 21 weiter drehfest verbunden. Die beiden Bestandteile 12 und 13 bestehen aus unterschiedlichen Werkstoffen. Zudem sind die beiden Bestandteile 12 und 13 durch unterschiedliche Herstellverfahren hergestellt. Der erste Bestandteil 12 ist bevorzugt als ein Metallblech, nämlich ein Stahlblech, ausgeformt. Der erste Bestandteil 12 ist vorzugsweise kaltumformtechnisch, wie tiefziehtechnisch und/oder stanztechnisch, bearbeitet und somit als Stanzformteil umgesetzt. Der zweite Bestandteil 13 besteht aus einem Stahlguss. Der zweite Bestandteil 13 ist durch ein Gießverfahren hergestellt und somit als Gussbauteil realisiert.

Des Weiteren sind die beiden Bestandteile 12, 13 in axialer Richtung verschachtelt, d.h. einander überdeckend, angeordnet. Da der zweite Bestandteil 13 deutlich dicker ausgeführt ist als der erste Bestandteil 12, ist der erste Bestandteil 12 in dem zweiten Bestandteil 13 eingebettet. Hierfür ist in dem zweiten Bestandteil 13 eine axiale Vertiefung 18 ausgebildet, in der der erste Bestandteil 12 angeordnet ist. Die Vertiefung weist eine größere axiale Erstreckung auf als die Blechdicke des ersten Bestandteils 12. Somit wird die Breite (axiale Erstreckung) des Schwungrades 7 unmittelbar durch die Abmaße des zweiten Bestandteils 13 vorgegeben.

Der erste Bestandteil 12 ist seitens eines Flanschbereiches 25 der Zwischenwelle 4 an der Zwischenwelle 4 angebracht. Hierfür sind mehrere erste Befestigungsmittel 11 in Umfangsrichtung verteilt angeordnet und verbinden den Flanschbereich 25 sowie den ersten Bestandteil 12 drehfest sowie axialfest miteinander. Die ersten Befestigungsmittel 11 sind jeweils als Niete ausgeführt. An einem radial außerhalb der ersten Befestigungsmittel 11 angeordneten radial äußeren Bereich ist der erste Bestandteil 12 im Bereich der Vertiefung 18 mit dem zweiten Bestandteil 13 befestigt. Hierfür sind zweite Befestigungsmittel 19 vorgesehen, die ebenfalls als Niete ausgebildet sind. Die zweiten Befestigungsmittel 19 verbinden die beiden Bestandteile 12 und 13 sowohl drehfest als auch axialfest miteinander.

Die Kupplungsscheibe 23 der zweiten Kupplung 5 weist in dieser Ausführung einen Dämpfer, einen Radialausgleich, oder ähnlichen Komponenten auf.

In anderen Worten ausgedrückt, ist ein Schwungrad 7 erfindungsgemäß zweiteilig ausgebildet und in das Hybridmodul 1 integriert.

Die mehrteilige Ausführung des Schwungrades 7 kann Bauraumvorteile bieten, wenn die Kupplungsscheibe 23 der K1-Kupplung 5 beispielsweise mit einem Dämpfer, einem Radialausgleich, oder ähnlichen Komponenten ausgestattet ist. Der innere Bereich (erster Bestandteil 12) des Schwungrades 7 kann dann beispielsweise als Blechstanzteil ausgeführt sein, welches mit dem äußeren aus Guss bestehenden Bereich (zweiter Bestandteil 13) des Schwungrades 7 verbunden ist. Da Stahlguss im Vergleich zu gestanzten Stahlblechen mit Mehrkosten verbunden ist, können hier je nach Ausführung auch Kosten eingespart werden. Die beiden Bauteile 12, 13 sind zwar axial unterschiedlich breit, durch den unterschiedlichen E-Modul von Stahlblech und Stahlguss kann aber die axiale Steifigkeit einer zweiteiligen Ausführung des Schwungrades 7 gegenüber einer einteiligen Variante aus Stahlguss ausgeglichen werden.

Das Bezugszeichen 29 bezeichnet einen einteilig ausgeführten Außenlamellenträger. Das Bezugszeichen 36 bezeichnet einen Sicherungsring zum Abstützen eines Lagers 35 des Außenlamellenträgers 29 und eines Tellerfeder-Stützblechs 37. Das Bezugszeichen 7 bezeichnet ein Schwungrad, das gemäß einer ersten Ausführung einteilig mit einem Flansch und einer Verzahnung für eine Verbindung zu einer Welle (Zwischenwelle 4) ausgebildet ist. Das Bezugszeichen 38 bezeichnet eine Tellerfeder, die einen Durchmesser aufweist, der kleiner als ein Innendurchmesser einer Mitnehmerverzahnung ist, um axialen Bauraum zu gewinnen. Das Bezugszeichen 4 bezeichnet eine Welle, die als Hohlwelle oder Vollwelle ausgeführt sein kann. Das Bezugszeichen 15 bezeichnet eine Zwischenwand, die Durchstellungen 39 mit einem Gewinde zum Verschrauben an einem Gehäuse aufweist.

### Bezugszeichenliste

- 1: Hybridmodul
- 2: erste Kupplung
- 3: zweiter Drehbestandteil der ersten Kupplung
- 4: Zwischenwelle
- 5: zweite Kupplung
- 6: erster Drehbestandteil der zweiten Kupplung
- 7: Schwungrad
- 8: Napfbereich
- 9a: erstes Stützlager
- 9b: zweites Stützlager
- 10: Kerbverzahnung
- 11: erstes Befestigungsmittel
- 12: erster Bestandteil des Schwungrades
- 13: zweiter Bestandteil des Schwungrades
- 14: erster Drehbestandteil der ersten Kupplung
- 15: Zwischenwand
- 16: Zentralschraube
- 17: Innengewinde
- 18: Vertiefung
- 19: zweites Befestigungsmittel
- 20: Anpressplatte
- 21: Kupplungsgehäuse
- 22: zweiter Drehbestandteil der zweiten Kupplung
- 23: Kupplungsscheibe
- 24: Scheibenbereich
- 25: Flanschbereich
- 26: Drehachse
- 27: Dämpfungseinrichtung
- 28a: erstes Reibelement
- 28b: zweites Reibelement
- 29: erster Träger
- 30: zweiter Träger
- 31: Zugmittel
- 32: Zugmittelaufnahmebereich
- 33: Nietverbindung
- 34: Nehmerzylinder
- 35: Lager
- 36: Sicherungsring
- 37: Stützblech
- 38: Tellerfeder
- 39: Durchstellung

## Patentansprüche

1. Hybridmodul (1) für einen Antriebsstrang eines Kraftfahrzeuges, mit einer ersten Kupplung (2) und einer mit einem Drehbestandteil (3) der ersten Kupplung (2) drehfest verbundenen Zwischenwelle (4), wobei die Zwischenwelle (4) zudem mit einem Drehbestandteil (6) einer zweiten Kupplung (5) drehfest gekoppelt oder koppelbar ist, **wobei** die Zwischenwelle (4) mit einem den Drehbestandteil (6) der zweiten Kupplung (5) zumindest teilweise ausbildenden Schwungrad (7) verbunden ist, **dadurch gekennzeichnet, dass** das Schwungrad (7) einen, aus einem Metallblech ausgeformten, ersten Bestandteil (12) und einen, aus einem Metallguss ausgeformten, zweiten Bestandteil (13) aufweist.

2. Hybridmodul (1) nach Anspruch 1, **dadurch gekennzeichnet, dass** das Schwungrad (7) einteilig oder mehrteilig ausgebildet ist.

3. Hybridmodul (1) nach Anspruch 1 oder 2, **dadurch gekennzeichnet, dass** das Schwungrad (7) einen Napfbereich (8) aufweist, wobei an dem Napfbereich (8) ein Stützlager (9b) angebracht ist.

4. Hybridmodul (1) nach einem der Ansprüche 1 bis 3, **dadurch gekennzeichnet, dass** das Schwungrad (7) formschlüssig und/oder kraftschlüssig mit der Zwischenwelle (4) verbunden ist.

5. Hybridmodul (1) nach einem der Ansprüche 1 bis 4, **dadurch gekennzeichnet, dass** das Schwungrad (7) mittels einer Verzahnung (10) drehfest mit der Zwischenwelle (4) verbunden ist.

6. Hybridmodul (1) nach einem der Ansprüche 1 bis 4, **dadurch gekennzeichnet, dass** das Schwungrad (7) mittels mehrerer Befestigungsmittel (11) drehfest mit der Zwischenwelle (4) verbunden ist.

7. Hybridmodul (1) nach Anspruch 1, **dadurch gekennzeichnet, dass** die beiden Bestandteile (12, 13) des Schwungrades (7) miteinander formschlüssig und/oder kraftschlüssig verbunden sind.

8. Hybridmodul (1) nach Anspruch 1 oder 7, **dadurch gekennzeichnet, dass** die beiden Bestandteile (12, 13) des Schwungrades (7) in axialer Richtung verschachtelt sind.

9. Hybridantriebsstrang für ein Kraftfahrzeug, mit einem Hybridmodul (1) nach zumindest einem der Ansprüche 1 bis 8.

## Claims

1. A hybrid module (1) for a drive train of a motor vehicle, with a first clutch (2) and an intermediate shaft (4) connected to a rotating component (3) of the first clutch (2), so as to rotate with it, wherein the intermediate shaft (4) is or can be coupled to a rotating component (6) of a second clutch (5), so as to rotate with it, **wherein** the intermediate shaft (4) is connected to a flywheel (7) which at least partially forms the rotating component (6) of the second clutch (5), **characterised in that** the flywheel (7) has a first component (12) formed from a metal sheet and a second component (13) formed from a metal casting.

2. The hybrid module (1) according to claim 1, **characterised in that** the flywheel (7) is constructed in one piece or in several pieces.

3. The hybrid module (1) according to claim 1 or 2, **characterised in that** the flywheel (7) has a cup area (8), wherein a support bearing (9b) is attached to the cup area (8).

4. The hybrid module (1) according to any one of claims 1 to 3, **characterised in that** the flywheel (7) is connected to the intermediate shaft (4) in a form-locking or force-locking manner.

5. The hybrid module (1) according to any one of claims 1 to 4, **characterised in that** the flywheel (7) is connected to the intermediate shaft (4), so as to rotate with it, by means of a toothing (10).

6. The hybrid module (1) according to any one of claims 1 to 4, **characterised in that** the flywheel (7) is connected to the intermediate shaft (4), so as to rotate with it, by means of a plurality of fastening means (11).

7. The hybrid module (1) according to claim 1, **characterised in that** the two components (12, 13) of the flywheel (7) are connected to one another in a form-locking and/or force-locking manner.

8. The hybrid module (1) according to claim 1 or 7, **characterised in that** the two components (12, 13) of the flywheel (7) are nested in the axial direction.

9. A hybrid drive train for a motor vehicle, comprising a hybrid module (1) according to at least one of claims 1 to 8.

## Revendications

1. Module hybride (1) pour une chaîne de traction d'un véhicule automobile, comportant un premier embrayage (2) et un arbre intermédiaire (4) accouplé de manière solidaire en rotation à un composant rotatif (3) du premier embrayage (2), dans lequel l'arbre intermédiaire (4) est également accouplé ou peut être accouplé de manière solidaire en rotation à un composant rotatif (6) d'un second embrayage (5), **dans lequel** l'arbre intermédiaire (4) est relié à un volant d'inertie (7) formant au moins partiellement le composant rotatif (6) du second embrayage (5), **caractérisé en ce que** le volant d'inertie (7) comporte un premier composant (12) formé d'une tôle métallique et un second composant (13) formé d'une pièce coulée métallique.

2. Module hybride (1) selon la revendication 1, **caractérisé en ce que** le volant d'inertie (7) est réalisé sous la forme d'une seule pièce ou de plusieurs pièces.

3. Module hybride (1) selon la revendication 1 ou 2, **caractérisé en ce que** le volant d'inertie (7) comporte une zone de godet (8), dans lequel un palier de support (9b) est monté sur la zone de godet (8).

4. Module hybride (1) selon l'une quelconque des revendications 1 à 3, **caractérisé en ce que** le volant d'inertie (7) est relié par liaison de complémentarité de forme ou par liaison de complémentarité de force à l'arbre intermédiaire (4).

5. Module hybride (1) selon l'une quelconque des revendications 1 à 4, **caractérisé en ce que** le volant d'inertie (7) est relié de manière solidaire en rotation, au moyen d'une denture (10), à l'arbre intermédiaire (4).

6. Module hybride (1) selon l'une quelconque des revendications 1 à 4, **caractérisé en ce que** le volant d'inertie (7) est relié de manière solidaire en rotation, au moyen de plusieurs moyens de fixation (11), à l'arbre intermédiaire (4).

7. Module hybride (1) selon la revendication 1, **caractérisé en ce que** les deux composants (12, 13) du volant d'inertie (7) sont reliés l'un à l'autre par liaison de complémentarité de forme ou par liaison de complémentarité de force.

8. Module hybride (1) selon la revendication 1 ou 7, **caractérisé en ce que** les deux composants (12, 13) du volant d'inertie (7) sont emboîtés dans le sens axial.

9. Chaîne de traction hybride pour un véhicule automobile comprenant un module hybride (1) selon au moins l'une quelconque des revendications 1 à 8.
